# EUROPEAN PATENT APPLICATION

(11) **EP 4 269 515 A1**
(43) Date of publication of application: **01.11.2023**
(21) Application number: 21911405.5
(22) Date of filing: 16.12.2021
(51) Int. Cl.: C09D 175/04, B05D 7/14, C09D 7/40, B32B 37/12, B32B 15/01, C09J 175/04, C09J 5/06

(54) **ELECTRICAL STEEL SHEET, AND ELECTRICAL STEEL SHEET LAMINATE**

(30) Priority: 22.12.2020 KR 20200180972
(71) Applicant: POSCO Co., Ltd, Pohang-si, Gyeongsangbuk-do 37859 (KR)
(72) Inventor: HA, Bongwoo, Pohang-si, Gyeongsangbuk-do 37859 (KR); KIM, Jungwoo, Pohang-si, Gyeongsangbuk-do 37859 (KR); SEO, Kang, Pohang-si, Gyeongsangbuk-do 37859 (KR); KANG, Daegyu, Pohang-si, Gyeongsangbuk-do 37859 (KR); NO, Taeyoung, Pohang-si, Gyeongsangbuk-do 37859 (KR); LEE, Donggyu, Pohang-si, Gyeongsangbuk-do 37859 (KR); PARK, Gyeongryeol, Pohang-si, Gyeongsangbuk-do 37859 (KR)
(74) Representative: Meissner Bolte Partnerschaft mbB
(86) International application number: PCT/KR2021/019226
(87) International publication number: WO 2022/139338

(57) **Abstract**

The present invention relates to an electrical steel sheet and a laminate thereof, and provided is an electrical steel sheet including: an electrical steel sheet; and a polyurethane coating layer positioned on the electrical steel sheet, in which the rebound elastic modulus of the polyurethane coating layer is 5% to 30%.

## Description

### [Technical Field]

The present invention relates to an electrical steel sheet and an electrical steel sheet laminate.

### [Background Art]

Non-oriented electrical steel sheet is a steel sheet with uniform magnetic properties in all directions on a rolled sheet, and is widely used in motors, generator iron cores, electric motors, small transformers, and the like.

Electrical steel sheets may be divided into two types of those which need to be subjected to stress relief annealing (SRA) in order to improve magnetic properties after a blanking processing and those in which stress relief annealing is omitted when the cost loss due to heat treatment is greater than the magnetic property effect due to stress relief annealing.

Insulation coatings are typically required to have electrical properties that suppress the generation of eddy current as coatings coated in the finishing manufacturing process of laminates such as motors, generator iron cores, electric motors, and small transformers. In addition, insulation coatings are required to have continuous blanking workability, adhesion resistance, surface adhesion, and the like. Continuous blanking workability means the ability to suppress abrasion of a die when laminating a large number of sheets after blanking processing into a predetermined shape to form an iron core. Adhesion resistance means the ability of the iron core steel sheets not to adhere to each other after the stress relief annealing process which restores magnetic properties by removing the working stress of the steel sheets.

In addition to these basic properties, excellent application workability of a coating solution and solution stability that can be used for a long time after blending are also required. These insulation coatings can be prepared as electrical steel sheet laminates only when separate fastening methods such as welding, clamping, and interlocking are used.

### [Disclosure]

### [Technical Problem]

An exemplary embodiment of the present invention provides an electrical steel sheet on which a coating layer is formed and a laminate thereof, which can bond (fasten) the electrical steel sheet without using existing fastening methods such as welding, clamping, and interlocking.

### [Technical Solution]

An electrical steel sheet according to an exemplary embodiment of the present invention includes: an electrical steel sheet; and a polyurethane coating layer positioned on the electrical steel sheet, in which the rebound elastic modulus of the polyurethane coating layer is 5% to 30%.

The tensile strength of the polyurethane coating layer is 50 MPa to 70 MPa.

The elongation of the polyurethane coating layer is 150% to 250%.

The polyurethane coating layer includes organic particles, inorganic particles or a combination thereof.

The sum c of organic particles, inorganic particles, or a combination thereof in the polyurethane coating layer is more than 0 wt% and 20 wt% or less based on 100 wt% of the entire coating layer.

The polyurethane coating layer includes an adhesive resin and a bonding additive, and the adhesive resin is a polyurethane formed by reacting a diisocyanate monomer and a polyol.

The bonding additive is one or more selected from the group consisting of a coupling agent, a wetting agent, a curing agent, and a curing catalyst.

The diisocyanate monomer includes an aromatic diisocyanate monomer, an aliphatic diisocyanate monomer, or a mixture thereof.

The aromatic diisocyanate monomer the following Chemical Formula 1, Chemical Formula 2, or a combination thereof.

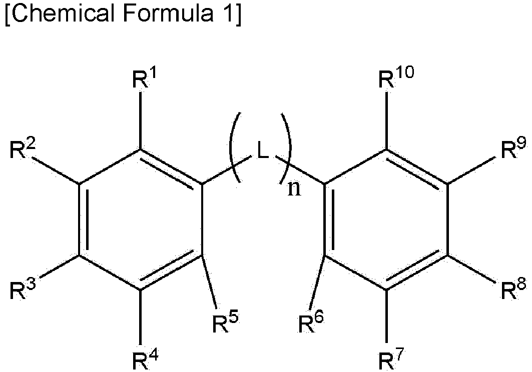

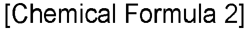

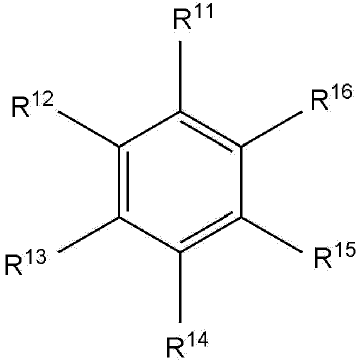

In Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is isocyanate, and any one of R⁶ to R¹⁰ is isocyanate,
the case where both R³ and R⁸ are isocyanate is excluded,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is any one integer of 1 to 10,
in Chemical Formula 2,
R¹¹ to R¹⁶ are each independently hydrogen, deuterium, a substituted or unsubstituted C1 to C10 alkyl group, a substituted or unsubstituted C6 to C20 aryl group, or a substituted or unsubstituted C5 to C20 heteroaryl group, an isocyanate group or a substituted or unsubstituted C1 to C10 alkyl isocyanate group, and at least two of R¹¹ to R¹⁶ are an isocyanate or a substituted or unsubstituted C1 to C10 alkyl isocyanate.

The aliphatic diisocyanate monomer is the following Chemical Formula 3.

[Chemical Formula 3] O=C=N-R-N=C=O

In Chemical Formula 3, R is a substituted or unsubstituted C1 to C10 alkyl group, or a substituted or unsubstituted C3 to C12 cycloalkyl group.

An electrical steel sheet laminate according to an exemplary embodiment of the present invention includes: a plurality of electrical steel sheets; and a polyurethane coating layer positioned between the electrical steel sheets, in which the rebound elastic modulus of the polyurethane coating layer is 5% to 30%.

The tensile strength of the polyurethane coating layer is 50 MPa to 70 MPa.

The elongation of the polyurethane coating layer is 150% to 250%.

The polyurethane coating layer includes organic particles, inorganic particles or a combination thereof.

The sum c of organic particles, inorganic particles, or a combination thereof in the polyurethane coating layer is more than 0 wt% and 20 wt% or less based on 100 wt% of the entire coating layer.

### [Advantageous Effects]

According to an exemplary embodiment of the present invention, electrical steel sheets can be bonded without using existing fastening methods such as welding, clamping, and interlocking.

According to an exemplary embodiment of the present invention, it is possible to provide an adhesive coating composition for electrical steel sheets that is excellent in noise characteristics, vibration characteristics, tensile strength, coating film adhesion, peeling characteristics, and the like.

### [Description of the Drawings]

FIG. 1 is a schematic view of an electrical steel sheet laminate.
FIG. 2 is a schematic cross-sectional view of an electrical steel sheet laminate according to an exemplary embodiment of the present invention.

### [Mode for Invention]

Hereinafter, exemplary embodiments of the present invention will be described in detail. However, the exemplary embodiments are suggested as an example, the present invention is not limited thereby, and the present invention is defined only by the scope of the claims to be described below.

The present invention is intended to provide a bonding composition for an electrical steel sheet. An adhesive coating composition is also a term used to describe the bonding composition in the description of the present invention. Further, the bonding composition of the present invention is a composition capable of bonding the surfaces of two or more steel sheets, and the use thereof is not particularly limited, but may be, for example, a self-bonding composition for electrical steel sheets for providing self-bonding of electrical steel sheets.

In an exemplary embodiment of the present invention, an electrical steel sheet and a laminate thereof are provided.

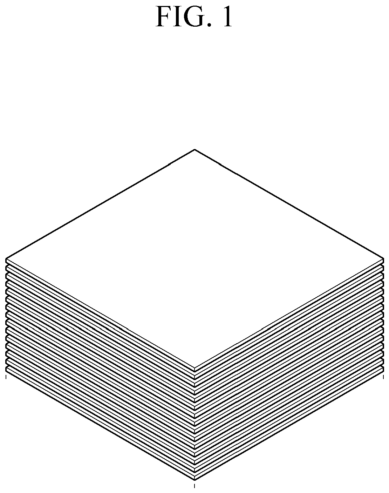

An electrical steel sheet laminate according to an exemplary embodiment of the present invention includes a plurality of electrical steel sheets and a polyurethane coating layer positioned between the plurality of electrical steel sheets. FIG. 1 shows a schematic view of an electrical steel sheet laminate according to an exemplary embodiment of the present invention. As shown in FIG. 1, it is a form in which a plurality of electrical steel sheets are laminated.

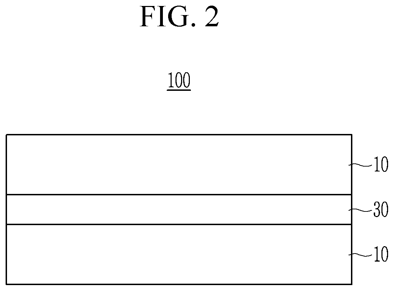

FIG. 2 shows a schematic cross-sectional view of an electrical steel sheet laminate according to an exemplary embodiment of the present invention. As shown in FIG. 2, an electrical steel sheet laminate 100 according to an exemplary embodiment of the present invention includes: a plurality of electrical steel sheets 10; and a polyurethane coating layer 30 positioned between the plurality of electrical steel sheets.

The electrical steel sheet laminate according to an exemplary embodiment of the present invention may be a laminate in which different electrical steel sheets are heat-staked by forming a polymer adhesive layer simply using the above-described adhesive coating composition without using existing methods such as welding, clamping, and interlocking.

In this case, since the electrical steel sheet laminate is used to manufacture a motor core through adhesion, physical or thermal impact is not applied to the steel sheet like welding or interlocking, so that when a motor is manufactured using the electrical steel sheet, the efficiency of the motor is excellent. In addition, it is possible to minimize the noise/vibration generated in the non-bonded part by bonding the entire sheet with the adhesive and ameliorate the noise/vibration characteristics by enhancing the ability to absorb noise.

As an electrical steel sheet 10, general non-oriented or oriented electrical steel sheets can be used without limitation. In an exemplary embodiment of the present invention, it is the main configuration to manufacture an electrical steel sheet laminate 100 by form a polyurethane coating layer 30 between a plurality of electrical steel sheets 10, so that a detailed description on the electrical steel sheet 10 is omitted.

The polyurethane coating layer 30 is formed between the plurality of electrical steel sheets 10, and has strong adhesive strength enough to bond the plurality of electrical steel sheets 10 without using existing fastening methods such as welding, clamping, and interlocking.

The polyurethane coating layer 30 is formed by coating the surface with an adhesive coating composition, curing the adhesive coating composition to form an adhesive coating layer, and laminating and heat-staking the adhesive coating layer.

When a plurality of electrical steel sheets 10, in which a polyurethane coating layer is formed, are laminated and heat-staked, a resin component in the adhesive coating layer is heat-staked to form a polymer adhesive layer.

In such a polymer adhesive layer, an inorganic metal compound is included in a main component of an organic material. An inorganic component can be uniformly dispersed in an organic material in the polymer adhesive layer to form a micro phase.

When a laminate is constructed so as to satisfy these factors, it is possible to obtain a laminate (core) capable of satisfying all of the various characteristics currently required in the EV market.

Hereinafter, each element will be specifically examined.

### Polyurethane coating layer

The polyurethane coating layer of an exemplary embodiment of the present invention may include an adhesive resins and a bonding additive. In this case, the adhesive resin may be a polyurethane formed by reacting a diisocyanate monomer and a polyol.

As the diisocyanate monomer, an aromatic diisocyanate monomer, an aliphatic diisocyanate monomer, or a mixture thereof may be included.

The aromatic diisocyanate monomer may be a monomer which is the following Chemical Formulae 1 and 2, or a combination thereof.

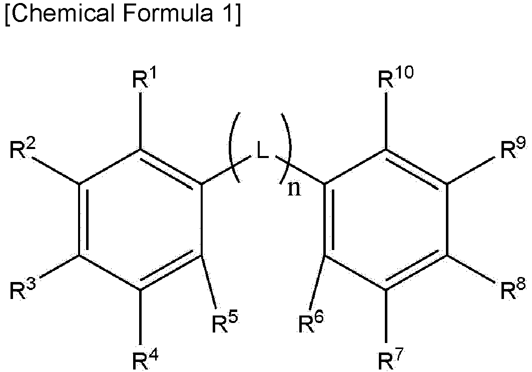

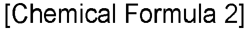

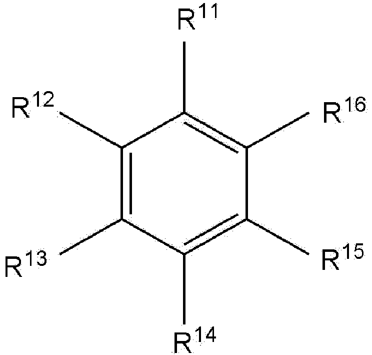

In Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is isocyanate, and any one of R⁶ to R¹⁰ is isocyanate,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is any one integer of 1 to 10,
in Chemical Formula 2,
R¹¹ to R¹⁶ are each independently hydrogen, deuterium, a substituted or unsubstituted C1 to C10 alkyl group, a substituted or unsubstituted C6 to C20 aryl group, or a substituted or unsubstituted C5 to C20 heteroaryl group, an isocyanate group or a substituted or unsubstituted C1 to C10 alkyl isocyanate group, and
at least two of R¹¹ to R¹⁶ are an isocyanate or a substituted or unsubstituted C1 to C10 alkyl isocyanate.

In the monomer represented by Chemical Formula 1, any one of R¹ to R⁵ is an isocyanate, any one of R⁶ to R¹⁰ is an isocyanate, the case where both R³ and R⁸ are an isocyanate is excluded, and the case where both R¹ and R¹⁰ are an isocyanate may be further excluded.

In the monomer represented by Chemical Formula 1, it is possible to further exclude those in which any one of R¹ to R⁵ is an isocyanate, any one of R⁶ to R¹⁰ is an isocyanate, and any one of R¹ to R⁵ and any one of R⁶ to R¹⁰ are simultaneously an isocyanate symmetrically about L.

Specifically, the aromatic diisocyanate monomer may be a monomer which is the following Chemical Formulae 3 and 4, or a combination thereof.

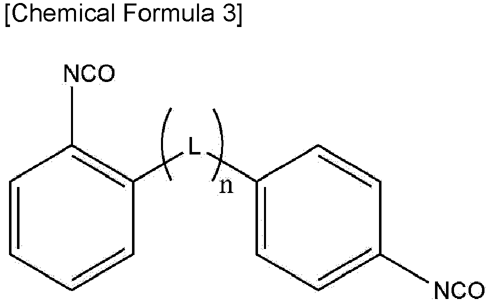

In Chemical Formula 3,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group.

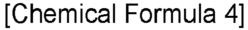

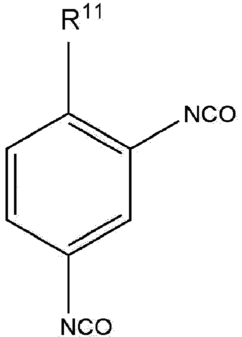

In Chemical Formula 4,
R¹¹ may be hydrogen, deuterium, a substituted or unsubstituted C1 to C10 alkyl group, a substituted or unsubstituted C6 to C20 aryl group, or a substituted or unsubstituted C5 to C20 heteroaryl group.

More specifically, as the aromatic diisocyanate monomer, it is possible to use one or more selected from the group consisting of 2,4-toluene diisocyanate, 2,6-toluene diisocyanate, p-phenylene diisocyanate, 2,2'-methylene diphenyl diisocyanate, 2,4'-methylene diphenyl diisocyanate, 4,4'-methylene diphenyl diisocyanate, and m-xylene diisocyanate.

The aliphatic diisocyanate monomer may be a monomer represented by the following Chemical Formula 5.

[Chemical Formula 5] O=C=N-R-N=C=O

In Chemical Formula 5, R is a substituted or unsubstituted C1 to C10 alkyl group, or a substituted or unsubstituted C3 to C12 cycloalkyl group.

The aliphatic diisocyanate monomer includes one or more selected from the group consisting of hexamethylene Diisocyanate (HDI), 1,4-cyclohexane diisocyanate, 4,4'-dicyclohexylmethane diisocyanate, isophorone diisocyanate and hydrogenated xylene diisocyanate.

The polyurethane may include 50 parts by weight or less of the aliphatic diisocyanate monomer with respect to the total 100 parts by weight of the diisocyanate monomer used during the polymerization.

The polyol may be a polyol represented by Chemical Formula 6.

[Chemical Formula 6] HO-R'-OH

In Chemical Formula 6, R' may be a substituted or unsubstituted C1 to C10 alkyl group, a substituted or unsubstituted C6 to C20 aryl group, or a substituted or unsubstituted C5 to C20 heteroaryl group.

The polyol may have a number average molecular weight of 400 g/mol to 1000 g/mol. Furthermore, the polyol may be polypropylene glycol).

The bonding additive may be one or more selected from the group consisting of a coupling agent, a wetting agent, a curing agent, and a curing catalyst.

The bonding coating layer may include 0.5 parts by weight or more and 5 parts by weight or less of a coupling agent with respect to 100 parts by weight of the polyurethane resin, and the coupling agent may include an aminosilane coupling agent. Specifically, the aminosilane coupling agent may be 3-aminopropyl trimethoxysilane. Specifically, the bonding coating layer may include 0.5 parts by weight or more and 3 parts by weight or less of the coupling agent with respect to 100 parts by weight of the polyurethane resin.

When the aminosilane is not added or is added too little during the formation of the bonding coating layer, the effect of improving the adhesion at the interface between the base iron and the bonding layer cannot be expected, so that there may be a problem in that peel adhesion and ATF resistance characteristics deteriorate. In contrast, when the aminosilane is excessively added, it may cause an aggregation phenomenon in the bonding layer and degrade mechanical properties such as tensile strength and elongation, thereby leading to a problem in that adhesion between the base iron and the bonding layer is not improved. Preferably, the content of aminosilane in the bonding coating layer for electrical steel sheets may be controlled within the above range.

The bonding coating layer may further include other components which can be used in the bonding composition in addition to the adhesive polymer resin, which is a polyurethane, and aminosilane..

The other components are not limited as long as they are used in a general bonding coating layer, and may include, for example, a wetting agent, a curing agent, a curing catalyst, and the like.

Specifically, the wetting agent may include a silicone-based wetting agent. An example of a silicone-based wetting additive may be polyether-modified polydimethylsiloxane. The wetting agent may be added to the bonding coating layer to enhance the interfacial adhesion between the electrical steel sheet and the bonding layer.

Specifically, the curing agent may include aliphatic amine-based, aromatic amine-based, aminoamine-based, or imidazole-based curing agents. More specifically, a dicyandiamide-based curing agent can be included.

Specifically, as the curing catalyst, an imidazole-based curing catalyst may be included.

The bonding coating layer 200 may further include 0.50 parts by weight to 2.50 parts by weight of a curing agent based on 100 parts by weight of the polyurethane resin. Specifically, a curing agent may be further included in an amount of 0.90 parts by weight to 1.10 parts by weight. The curing agent serves to adjust the reactivity of the surface of the bonding coating layer. When the curing agent is included too little, the curing reaction of the bonding layer deteriorates, so that there may be a problem in that the stickiness of the surface of the bonding layer deteriorates. Conversely, when too much curing agent is added, the fastening force may deteriorate after low-temperature staking.

The bonding coating layer may further include 0.05 parts by weight to 0.50 parts by weight of a wetting agent based on 100 parts by weight of the polyurethane resin. Specifically, a wetting agent may be further included in an amount of 0.09 parts by weight to 0.11 parts by weight.

The bonding coating layer may further include 0.10 parts by weight to 1.00 parts by weight of a curing catalyst with respect to 100 parts by weight of the polyurethane resin. Specifically, a curing catalyst may be further included in an amount of 0.40 parts by weight to 0.60 parts by weight.

### Rebound elastic modulus of polyurethane coating layer

The rebound elastic modulus of the adhesive coating layer of a bonding product is 5% or more and 30% or less. In consideration of the change in rebound elastic modulus of the bonding product in the high-temperature driving environment, the rebound elastic modulus is preferably 5% or more and 25% or less. More specifically, the rebound elastic modulus may be 7% to 25%, and may be 7% to 15%.

Although products made with an adhesive having a rebound elastic modulus of less than 5% have excellent vibration absorption ability, the ATF characteristics of the motor core are reduced due to the addition of excessive organic/inorganic particles. In contrast, when the rebound elastic modulus exceeded 30%, the vibration absorbing ability deteriorated.

In order to control the rebound elastic modulus, the rebound elastic modulus may be controlled through the organic/inorganic particles included in a soft urethane resin. The soft urethane is formed by a mixed reaction of a polyol and an aromatic isocyanate. Specifically, the soft urethane may be synthesized at a 60% content ratio of polypropylene glycol and 40% content ratio of a methylene diphenyl diisocyanate (MDI) alone or an aromatic isocyanate mixed with toluene diisocyanate (TDI).

Accordingly, when the organic/inorganic particles are included in an amount of 0.1% to 20%, the adhesive coating layer may have a rebound elastic modulus in the above range. As the types of organic/inorganic particles used at this time, carbon black, silica, a mixture thereof, and the like may be used.

For the measurement of the rebound elastic modulus, the rebound energy generated when a weight in the horizontal position is applied to the specimen in the 90 degree position is expressed as a percentage of the digital method. The detailed measurement standard measures the rebound elastic modulus in accordance with KS M ISO 4662.

### Maximum tensile strength and elongation

In order to measure the mechanical properties of the synthesized polyurethane polymer, the synthesized polyurethane polymer was poured onto release paper, applied to a uniform thickness using an applicator, and dried in a vacuum oven at 100°C for 24 hours to produce a dry film.

The maximum tensile strength and elongation of the film were measured at a speed of 50 mm/min using a universal testing machine according to the ASTM D-1708 standard.

In this case, the elongation of the urethane layer according to an exemplary embodiment of the present invention may be 150% to 250%. More specifically, the elongation may be 110% to 170%.

When the elongation satisfies this range, there is an advantage in that workability is excellent during slitting and blanking operations in a core yarn. There are problems in that when the elongation is 100% or less, a powder is generated from the adhesive layer in a die during blanking, causing contamination of the die, and when the elongation is 250% or more, the film is stretched without being cut by a cutting machine during a slitting operation.

Further, the tensile strength of the urethane layer according to an exemplary embodiment of the present invention may be 50 MPa to 70 MPa. More specifically, the tensile strength may be 60 MPa to 70 MPa.

When the tensile strength satisfies this range, there is an advantage in that workability is excellent during the manufacture of a motor core through heat staking in a core yarn. When the tensile strength is 50 MPa or less, there is a disadvantage in that the adhesive layer leaks to the outer surface of the core due to the staking pressure during heat staking to contaminate the motor core, and when the tensile strength is 70 MPa or more, there is a disadvantage in that high pressure is required for heat staking, thereby leading to deterioration in workability.

### Noise characteristic evaluation

A ring-type motor core was manufactured in order to evaluate the noise characteristics generated by the motor core unit in a driving motor. A ring core with an outer diameter of 128 mm, an inner diameter of 90 mm, and a height of 45 mm was manufactured by blanking and heat-staking a product in which an adhesive was applied to a 0.27 mmt non-oriented electrical steel sheet.

The axial dynamic characteristics of the ring core thus manufactured were measured. In order to grasp the dynamic characteristics (eigen frequency, eigen mode, damping ratio) of a typical machine or structure, an external force is applied, and the transfer function, which is a function that obtains the dynamic response to this, is used.

This is the function that expresses the ratio of the response to the external force (F), and when the frequency is analyzed as a response, particularly, the frequency response function (FRF) is the basic and most frequently used basic function for the dynamic characteristic analysis. Damping property was measured by this FRF characteristic analysis.

### Evaluation of ATF resistance characteristics

When a driving motor is used in an automobile, the automobile generates a lot of heat when the automobile rotates at high speed for a long time, so that an automotive transmission fluid (ATF) is used to cool the automobile. Accordingly, it is important to maintain the adhesive strength of a laminated coil in the state of being impregnated with high-temperature ATF in order to secure adhesion reliability during long-term use. Accordingly, ATF resistance characteristics were evaluated.

After the laminated coil manufactured above was impregnated with ATF at a temperature of 150°C for 500 hours, the shear adhesive strength was tested.

The shear adhesive strength for measuring the ATF resistance characteristics was measured by the shear method (shear strength). A specimen standard for shear method measurement was produced in accordance with ISO 4587. Two 25 x 100mm specimens were adhered together in an area of 12.5 x 25 mm² and heat-staked under the above conditions to produce a shear method specimen.

After the specimen produced by the shear method was fixed to the upper/lowerjig (JIG) with a predetermined force, the shear adhesive strength was measured using a device that measures the tensile force of a laminated sample while being pulled at a predetermined speed. In this case, in the case of the shear method, the measured value was measured at the point where the interface with the minimum adhesive strength fell off from the interface of the laminated samples.

The examples and comparative examples in the following Table 1 included, based on 100 parts by weight of the bonding resin, 0.5 parts by weight of a silane coupling agent, 0.1 parts by weight of a silicone-based wetting agent, 1 part by weight of a dicyandiamide-based curing agent, and 0.5 parts by weight of an imidazole-based curing catalyst in the bonding resin.

In the bonding resins of Examples 1 to 4 and Comparative Examples 1 and 2 of Table 1, as the polyurethane, a polyurethane obtained by reacting 40 wt% of a 2,4'-methylene diphenyl diisocyanate (MDI) monomer with 60 wt% of polypropylene glycol (PPG) (number molecular weight: 425 g/mol) was used.

In the bonding resins of Examples 5 to 7, as the polyurethane, a polyurethane obtained by reacting 40 wt% of 2,4-TDI, 2,2'-MDI, and 4,4'-MDI with 60 wt% of PPG were used, respectively. In this case, TDI means toluene diisocyanate.

In the bonding resin of Example 8, as the polyurethane, a polyurethane obtained by reacting 40 wt% of a monomer in which 2,4'-MDI and HDI were mixed at 8:2 with 60 wt% of PPG was used. In this case, HDI means hexamethylene diisocyanate.

The epoxy resins of Comparative Examples 3 and 4 were bisphenol A type epoxy resins, and epoxy resins having a number average molecular weight of 10,000 g/mol and a hydroxyl value of 10 mgKOH/g were used.

The bonding resins of Comparative Examples 5 to 8 were those in which a polyurethane resin and an epoxy resin were mixed at a weight ratio of 50 : 50, and as the polyurethane resin, a polyurethane resin, which is the same as that used in Example 1, was used, and as the epoxy resin, an epoxy resin, which is the same as in Comparative Example 3, was used resin.

**(Table 1)**

| Classification | Bonding resin | Organic/inorganic particles | | Adhesive mechanical properties | | | Vibration absorption evaluation (Damping >0.03) | ATF resistance (Shear adhesive strength >1MPa) |
|---|---|---|---|---|---|---|---|---|
| | | Type | Conten t (wt%, based on 100 wt of resin) | Rebound elastic modulus (%) | Tensile strongth (MPa) | Elongation (%) | | |
| Example 1 | Urretha ne (2,4'-MDI + PPG) | Silica SiO₂ | 0.1 | 25 | 50 | 250 | 0.04 | 4 |
| Example 2 | Urethan e (2,4'-MDI + PPG) | Silica SiO₂ | 17 | 7 | 70 | 110 | 0.09 | 3 |
| Example 3 | Urethan e (2,4'-MDI + PPG) | Carbo n black (carbo n black) | 5 | 15 | 60 | 170 | 0.06 | 3 |
| Example 4 | Urethan e (2,4'-MDI + PPG) | TiO₂ | 5 | 12 | 65 | 150 | 0.05 | 5 |
| Example 5 | Urethan e (2,4-TDI + PPG) | Silica SiO₂ | 10 | 8 | 65 | 170 | 0.035 | 6 |
| Example 6 | Urethan e (2,2'-MDI + PPG) | Silica SiO₂ | 10 | 7 | 70 | 200 | 0.04 | 5 |
| Example 7 | Urethan e (4,4'-MDI + PPG) | Silica SiO₂ | 10 | 6 | 68 | 220 | 0.045 | 5 |
| Example 8 | Urethan e (2,4'-MDI + HDI + PPG) | Silica SiO₂ | 10 | 8 | 65 | 180 | 0.04 | 4 |
| Com parati ve Example1 | Urethan e (2,4'-MDI + PPG) | - | - | 40 | 60 | 350 | 0.015 | 0.7 |
| Com parati | Urethan | Silica | 25 | 3 | 40 | 90 | 0.02 | 0.5 |
| ve Example2 | e (2,4'-MDI + PPG) | SiO₂ | | | | | | |
| Com parati ve Examples | Epoxy | - | - | 3 | 60 | 80 | 0.01 | 4 |
| Com parati ve Example4 | Epoxy | Silica SiO₂ | 0.5 | 2 | 60 | 70 | 0.01 | 4 |
| Com parati ve Examples | Urethan e (2,4'-MDI + PPG) + Epoxy | - | - | 50 | 50 | 150 | 0.02 | 2.5 |
| Com parati ve Examples | Urethan e (2,4'-MDI + PPG) + Epoxy | Silica SiO₂ | 10 | 20 | 55 | 100 | 0.025 | 1.5 |
| Com parati ve Example7 | Urethan e (2,4'-MDI + PPG) + Epoxy | Carbo n black (carbo n black) | 5 | 25 | 50 | 70 | 0.02 | 1.2 |
| Com parati ve Examples | Urethan e (2,4'-MDI + PPG) + Epoxy | TiO₂ | 5 | 35 | 50 | 75 | 0.02 | 1.5 |

From the above results, it was confirmed that in the case of Examples 1 to 8, the rebound elastic moduli were shown to be 5% to 30%, and vibration absorption evaluation characteristics and ATF resistance characteristics are excellent. Comparative Example 1 is a case where a urethane resin was used, but inorganic particles were not included, and the rebound elastic modulus was 40%, which was measured to be slightly high, and the elongation, vibration absorption characteristics, and ATF resistance characteristics were shown to be inferior.

Comparative Example 2 is a case where a urethane resin was used, but an excessive amount of inorganic particles were included, the rebound elastic modulus was shown to be as low as 3%, and as a result, the elongation, vibration absorption characteristics, and ATF resistance characteristics were shown to be inferior.

Comparative Examples 3 and 4 are cases where an epoxy resin was used alone, a rebound elastic modulus was shown to be less than 5%, which is a low value, regardless of whether inorganic particles were included, and the characteristics were shown to be inferior.

Comparative Examples 5 to 8 are cases where an epoxy resin was mixed with urethane and used, and it could be confirmed that the vibration absorption evaluation was shown to be inferior.

As a result, it can be seen that in order to obtain an electrical steel sheet for bonding with excellent vibration absorption evaluation and ATF resistance characteristics, the content of inorganic particles in the coating layer needs to be regulated and polyurethane also needs to be used alone in the bonding resin.

The present invention is not limited to the Examples, but may be prepared in various forms, and a person with ordinary skill in the art to which the present invention pertains will understand that the present invention can be implemented in another specific form without changing the technical spirit or essential feature of the present invention. Therefore, it should be understood that the above-described Examples are illustrative only in all aspects and are not restrictive.

## Claims

1. An electrical steel sheet comprising: an electrical steel sheet; and
a polyurethane coating layer positioned on the electrical steel sheet,
wherein a rebound elastic modulus of the polyurethane coating layer is 5% to 30%.

2. The electrical steel sheet of claim 1,
wherein a tensile strength of the polyurethane coating layer is 50 MPa to 70 MPa.

3. The electrical steel sheet of claim 1,
wherein an elongation of the polyurethane coating layer is 150% to 250%.

4. The electrical steel sheet of claim 1,
wherein the polyurethane coating layer comprises organic particles, inorganic particles or a combination thereof.

5. The electrical steel sheet of claim 1,
wherein a sum c of organic particles, inorganic particles, or a combination thereof in the polyurethane coating layer is more than 0 wt% and 20 wt% or less based on 100 wt% of the entire coating layer.

6. The electrical steel sheet of claim 1,
wherein the polyurethane coating layer comprises an adhesive resin and a bonding additive, and
the adhesive resin is a polyurethane formed by reacting a diisocyanate monomer and a polyol.

7. The electrical steel sheet of claim 6,
wherein the bonding additive is one or more selected from the group consisting of a coupling agent, a wetting agent, a curing agent, and a curing catalyst.

8. The electrical steel sheet of claim 6,
wherein the diisocyanate monomer comprises an aromatic diisocyanate monomer, an aliphatic diisocyanate monomer, or a mixture thereof.

9. The electrical steel sheet of claim 8,
wherein the aromatic diisocyanate monomer is the following Chemical Formula 1, Chemical Formula 2, or a combination thereof: 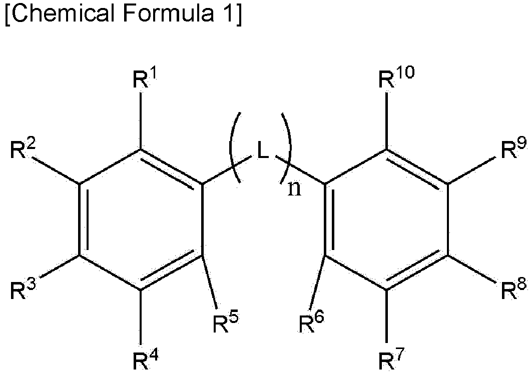 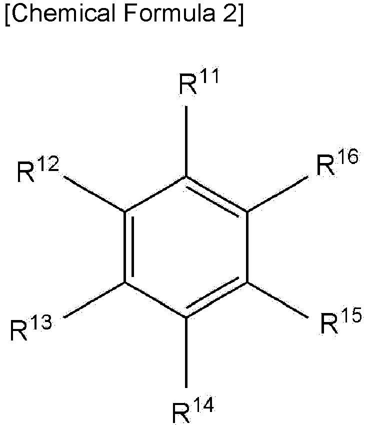 in Chemical Formula 1,
R¹ to R¹⁰ are each independently hydrogen, deuterium, a substituted or unsubstituted C1 to C10 alkyl group, a substituted or unsubstituted C6 to C20 aryl group, a substituted or unsubstituted C5 to C20 heteroaryl group, or an isocyanate group,
any one of R¹ to R⁵ is isocyanate, and any one of R⁶ to R¹⁰ is isocyanate,
the case where both R³ and R⁸ are isocyanate is excluded,
L is a substituted or unsubstituted C1 to C10 alkylene group, a substituted or unsubstituted C2 to C10 alkynylene group, a substituted or unsubstituted C6 to C20 arylene group, or a substituted or unsubstituted C5 to C20 heteroarylene group, and
n is any one integer of 1 to 10,
in Chemical Formula 2,
R¹¹ to R¹⁶ are each independently hydrogen, deuterium, a substituted or unsubstituted C1 to C10 alkyl group, a substituted or unsubstituted C6 to C20 aryl group, or a substituted or unsubstituted C5 to C20 heteroaryl group, an isocyanate group or a substituted or unsubstituted C1 to C10 alkyl isocyanate group, and at least two of R¹¹ to R¹⁶ are an isocyanate or a substituted or unsubstituted C1 to C10 alkyl isocyanate.

10. The electrical steel sheet of claim 8,
wherein the aliphatic diisocyanate monomer is the following Chemical Formula 3:
[Chemical Formula 3] O=C=N-R-N=C=O
in Chemical Formula 3,
R is a substituted or unsubstituted C1 to C10 alkyl group, or a substituted or unsubstituted C3 to C12 cycloalkyl group.

11. A laminate comprising: a plurality of electrical steel sheets; and
a polyurethane coating layer positioned between the electrical steel sheets,
wherein a rebound elastic modulus of the polyurethane coating layer is 5% to 30%.

12. The laminate of claim 11,
wherein a tensile strength of the polyurethane coating layer is 50 MPa to 70 MPa.

13. The laminate of claim 11,
wherein an elongation of the polyurethane coating layer is 150% to 250%.

14. The laminate of claim 11,
wherein the polyurethane coating layer comprises organic particles, inorganic particles or a combination thereof.

15. The laminate of claim 11,
wherein a sum c of organic particles, inorganic particles, or a combination thereof in the polyurethane coating layer is more than 0 wt% and 20 wt% or less based on 100 wt% of the entire coating layer.
